# FASCICULE DE BREVET EUROPEEN

(11) **EP 0 461 024 B1**
(45) Date de publication et mention de la délivrance du brevet: **28.12.1994**
(21) Numéro de dépôt: 91401456.8
(22) Date de dépôt: 04.06.1991
(51) Int. Cl.: F16F 13/00

(54) **Perfectionnements apportés aux supports antivibratoires hydrauliques**
Hydraulische Antischwingungslager
Hydraulic antivibration mounts

(30) Priorité: 07.06.1990 FR 9007088
(43) Date de publication de la demande: 11.12.1991
(73) Titulaire: HUTCHINSON, F-75384 Paris Cédex 08 (FR)
(72) Inventeur: Bouhours, Jean-Paul, F-28290 Arrou (FR); Dubos, Daniel, F-92600 Asnières (FR)
(74) Mandataire: Burbaud, Eric

(56) Documents cités:
- EP-A- 0 278 824
- EP-A- 0 297 174
- GB-A- 2 186 052
- GB-A- 2 206 668
- US-A- 4 796 874
- PATENT ABSTRACTS OF JAPAN vol. 12, no. 149 (M-694)(2996) 10 Mai 1988& JP-A-62 270 841 (HONDA MOTOR) 25 Novembre 1987
- PATENT ABSTRACTS OF JAPAN vol. 9, no. 272 (M-425)(1995) 30 Octobre 1985 & JP-A-60116 937 (TOYOTA) 24 Juin 1985

## Description

L'invention est relative aux dispositifs antivibratoires hydrauliques destinés à être interposés aux fins de support et d'amortissement entre deux éléments rigides individuellement soumis à certaines oscillations ou vibrations, éléments faisant par exemple partie, respectivement d'un châssis de véhicule et du moteur à combustion interne ou d'un train de suspension de ce véhicule.

L'invention concerne plus particulièrement, parmi les dispositifs du genre en question, ceux qui sont constitués par un boîtier étanche comportant un noyau rigide solidarisable avec l'un des deux éléments rigides, une embase rigide solidarisable avec l'autre élément rigide, et une paroi élastique annulaire de support, de préférence d'allure tronconique, reliant de manière étanche le noyau à l'embase, le volume intérieur audit boîtier étant rempli d'un liquide amortisseur et le noyau étant prolongé, à l'intérieur du boîtier, par un pied rigide lui-même terminé par un sabot ou piston dont le contour définit, avec la portion de paroi en regard du boîtier, un passage annulaire étranglé pour le liquide, la face de l'embase, qui est extérieure au boîtier, étant coiffée par un soufflet flexible et étanche raccordé de façon étanche à cette face de façon à former avec elle une poche de volume variable pour le liquide, ladite embase étant perforée par au moins une lumière, simple ou multiple, qui fait communiquer entre eux les volumes intérieurs du boîtier et de la poche.

De tels dispositifs sont connus du document GB-A-2 206 668.

Dans les dispositifs de ce genre, les oscillations appliquées axialement sur le noyau ou sur l'embase se traduisent par des refoulements alternatifs du piston dans le liquide et, pour une valeur bien déterminée F₀ de la fréquence d'alternance de ces refoulements, la colonne annulaire de liquide qui occupe le passage annulaire étranglé entourant le piston est soumise à un phénomène de résonance qui assure un excellent amortissement des oscillations considérées.

L'inconvénient de tels supports réside en ce que la valeur F₀ est imposée par les cotes du passage annulaire et donc difficile à modifier.

Or il est souvent intéressant de pouvoir adapter les dispositifs du genre en question à l'amortissement privilégié d'oscillations dont les fréquences ont des valeurs F₁, F₂... un peu différentes de F₀, et ce pour des cotes données du passage annulaire, c'est-à-dire sans qu'il soit nécessaire de remplacer pour autant le piston ou le boîtier dans lequel ce piston est immergé.

L'invention propose une formule particulièrement simple pour résoudre un tel problème.

A cet effet, les dispositifs du genre en question sont caractérisés selon l'invention en ce que la longueur de la lumière est inférieure à son diamètre moyen, et en ce que, pour un diamètre du piston de l'ordre de 50 à 70 mm, la longueur de la lumière est de l'ordre de 2 à 3 mm et son diamètre moyen de l'ordre de 10 à 50 mm.

La demanderesse a constaté que, d'une façon surprenante, la présence de la lumière ci-dessus dans l'embase n'empêche absolument pas "l'effet piston" de se produire et qu'il suffit de modifier la section d'ouverture de cette lumière pour modifier la fréquence correspondant à l'amortissement privilégié du support, la valeur de cette fréquence augmentant en même temps que ladite section.

Dans des modes de réalisation préférés, on a recours en outre à l'une et/ou à l'autre des dispositions suivantes :
- la face intérieure du boîtier est délimitée en partie par un clapet ou membrane monté de façon à pouvoir vibrer avec des débattements d'amplitude limitée,
- le clapet selon l'alinéa précédent est monté de façon à pouvoir alternativement obturer et dégager la lumière,
- dans un dispositif selon l'un quelconque des deux alinéas précédents, l'embase est perforée en outre par au moins un canal dont la longueur est très supérieure au diamètre moyen, canal faisant communiquer entre eux les volumes intérieurs du boîtier et de la poche,
- le degré d'ouverture de la lumière peut être réglé à l'aide d'un clapet obturateur associé à des moyens de commande extérieurs,
- le clapet obturateur est rotatif et lié angulairement à l'arbre d'un petit moteur électrique dont la commande est elle-même asservie à la fréquence des oscillations à amortir au maximum,
- le clapet obturateur est déplaçable axialement et comprend un bord tronconique applicable contre un siège tronconique faisant partie de l'embase.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention en se référant aux dessins ci-annexés d'une manière bien entendu non limitative.

La figure 1, de ces dessins, montre en coupe axiale un support antivibratoire établi selon l'invention.

La figure 2 est une coupe transversale partielle du même support selon les flèches II-II, figure 1.

La figure 3 montre en coupe axiale un autre support antivibratoire établi selon l'invention.

La figure 4 montre en plan l'une des deux grilles de ce support.

On suppose à titre d'exemple que chacun des supports considérés est destiné à être interposé verticalement ou selon une direction légèrement inclinée sur la verticale entre un organe porteur rigide constitué par un châssis de véhicule et un organe supporté rigide constitué par le moteur à combustion interne de ce véhicule.

Les notions de haut et de bas exprimées dans la description qui suit le sont à titre non limitatif car le support décrit peut également être utilisé à l'envers du sens adopté pour cette description.

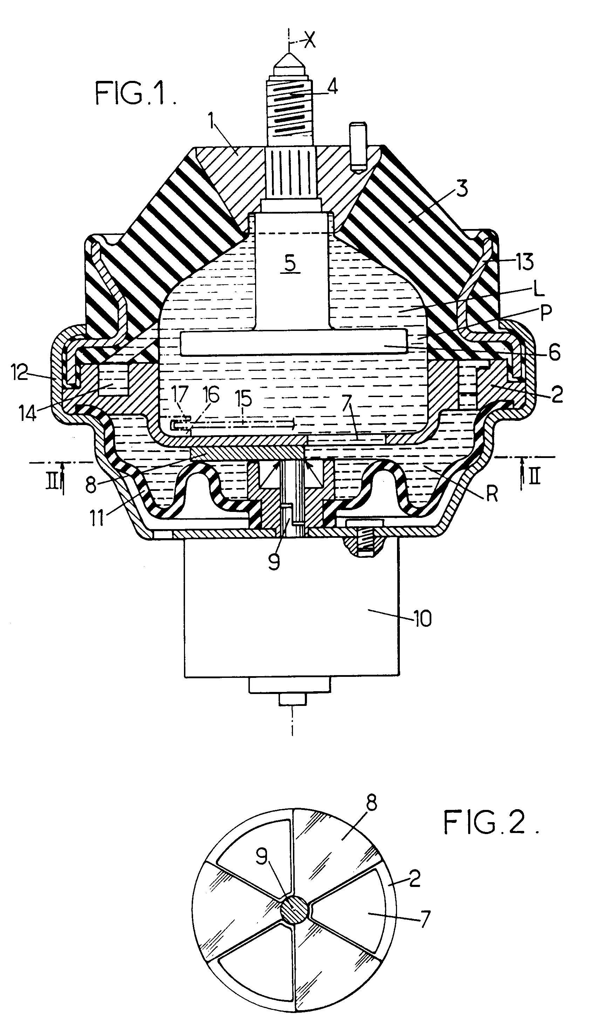

Le support des figures 1 et 2 se présente sous la forme générale d'un boîtier étanche de révolution autour d'un axe X généralement vertical, boîtier comportant :
- un noyau rigide supérieur 1,
- une cuvette rigide inférieure 2 à pourtour circulaire,
- une paroi annulaire élastique 3 suffisamment épaisse pour transmettre les charges du moteur au châssis, paroi délimitée en substance par deux surfaces tronconiques évasées vers le bas et dont la petite base, disposée en haut, est adhérée contre le noyau 1, sa grande base inférieure étant raccordée de façon étanche au bord de la cuvette 2,
- et une masse de liquide L remplissant l'intérieur de ce boîtier 1, 2, 3.

Un goujon 4 en attente dont la tige filetée s'étend vers le haut est solidaire du noyau 1 et sert à la fixation du moteur du véhicule sur ce noyau.

Pour ce qui est de la cuvette 2, son bord est également raccordé à des moyens (non représentés) permettant sa fixation sur la châssis du véhicule.

Le noyau 1, ou plus précisément le goujon 4, est prolongé vers l'intérieur du boîtier par un pied 5 lui-même terminé par un sabot élargi ou piston 6.

Ce piston 6 est dimensionné de façon telle que soit créé entre sa périphérie et la face interne en regard du boîtier 1, 2, 3 un intervalle annulaire constituant passage étranglé p pour le liquide.

En outre, et conformément à l'invention, la cuvette 2 est évidée par au moins un orifice 7, simple ou multiple, dont la longueur axiale est très inférieure au diamètre moyen (on appelle ici diamètre moyen le diamètre du cercle ayant la même section globale que l'orifice concerné).

L'orifice en question est ici associé à un clapet rotatif 8 permettant de régler le degré de son ouverture.

A cet effet, ledit clapet 8 est lié angulairement à l'arbre 9 d'un petit moteur électrique 10 et il est agencé de façon à pouvoir glisser jointivement contre la face inférieure du bord de chaque ouverture 7.

On peut donner toute forme désirable aux orifices 7 et au clapet 8 : dans le mode de réalisation illustré à titre d'exemple, chaque orifice 7 présente la forme d'un secteur circulaire s'étendant sur un arc de 60 degrés, et le clapet comporte trois pans plats identiques présentant également la forme de secteurs circulaires de 60 degrés.

Un soufflet ou membrane étanche et flexible 11 est rapporté sur la face inférieure de la cuvette 2 de façon à former avec celle-ci une poche étanche R à volume variable.

Un capot de protection 12 enveloppe le soufflet 11 et permet l'assemblage étanche de celui-ci sur le bord de la cuvette 2 par rabattement de son propre bord circulaire, à la façon d'un sertissage, autour des pourtours des pièces suivantes axialement juxtaposées : la cuvette 2, soufflet 11 et une armature annulaire 13 de renforcement noyée dans la paroi 3.

Le fonctionnement du support ainsi décrit est le suivant.

On suppose initialement que l'obturateur rotatif 8 se trouve en sa position angulaire extrême pour laquelle les différents orifices 7, sont obturés.

Si l'on impose à l'un des deux éléments 1 et 2 des oscillations ou vibrations verticales par rapport à l'autre, il en résulte une succession de va-et-vient verticaux du piston 6 à l'intérieur du liquide L contenu dans le boîtier, ce qui se traduit par des refoulements alternatifs relatifs de la colonne annulaire, dudit liquide L, contenue dans le passage annulaire étranglé P.

Lorsque la fréquence de ces refoulements alternatifs est égale à une valeur F₀ prédeterminée, qui dépend essentiellement des cotes du passage P et du volume de liquide L confiné au-dessous du piston 6, la colonne considérée est soumise à un phénomène de résonance qui se traduit par une excellente filtration des oscillations à ladite fréquence F₀ en ce sens qu'elles ne sont pratiquement pas transmises entre les eléments 1 et 2.

Si, sur ces entrefaites, on entrouve les orifices 7, chaque sollicitation du piston 6 vers le bas ne se traduit plus obligatoirement par une remontée relative, à travers le passage P, d'un volume de liquide L équivalent à celui chassé par ce piston, moyennant une déformation correspondante de la paroi 3.

En effet, il est alors possible qu'une portion du volume de liquide L se trouvant au-dessous du piston 6 soit chassée à travers les orifices 7 dans la poche R avec déformation du soufflet 11.

Dans ces conditions, la valeur de la fréquence pour laquelle la colonne annulaire de liquide qui entoure le piston 6 entre en résonance n'est plus égale à F₀, mais à une nouvelle valeur F₁.

En outre cette nouvelle valeur varie en fonction du degré d'ouverture des orifices 7 et croît dans le même sens que cette ouverture.

On dispose ainsi d'un moyen particulièrement simple et efficace pour régler la valeur de la fréquence des oscillations qui sont amorties au maximum par le support considéré.

Il peut être intéressant de régler la position angulaire de l'obturateur 8 de façon telle que la valeur de la fréquence sur laquelle le support est accordé pour un amortissement maximum soit automatiquement, à chaque instant, celle des oscillations que l'on désire amortir au maximum à cet instant.

A cet effet, la commande du petit moteur électrique 10 est avantaqeusement asservie à la fréquence instantanée des oscillations à amortir, et notamment à la fréquence des vibrations du moteur du véhicule ou, ce qui revient au même, à la vitesse de rotation de l'arbre de sortie de ce moteur.

A titre de perfectionnement non indispensable, on peut en outre prévoir en tout emplacement désirable de la face intérieure du boîtier un clapet ou membrane -souvent appelé "de découplage haute fréquence"- monté de façon à pouvoir osciller avec une amplitude limitée de ses débattements, ce qui permet d'assurer entre les deux éléments 1 et 2 un amortissement pour des vibrations de relativement faible amplitude (par exemple de l'ordre de 0,5 mm) et de fréquence généralement comprise entre 20 et 50 Hz : une telle "membrane" se présente notamment sous la forme d'un disque rigide 15 d'axe X monté à proximité du fond de la cuvette 2 entre deux butées angulaires 16, 17 solidaires de cette cuvette et rendant possibles les débattements verticaux du disque 15 en question avec une amplitude limitée à 0,5 mm, le liquide L pouvant passer d'un côté à l'autre de ce disque 15, autour de celui-ci, tant qu'il n'est pas appliqué contre l'une de ces butées.

En combinaison avec la disposition qui vient d'être décrite, il peut être avantageux d'évider dans la cuvette 2, et en particulier dans sa périphérie annulaire épaissie, un canal 14 présentant une longueur très supérieure à son diamètre moyen, ledit canal demeurant ouvert en permanence et reliant entre eux les volumes intérieurs respectifs du boîtier 1, 2, 3 et de la poche R : ce canal 14 joue un rôle sensiblement analogue à celui du passage étranglé P en ce sens que la colonne de liquide L disposée dans ledit canal est également refoulée alternativement dans celui-ci lors de l'application d'oscillations axiales relatives entre les deux éléments 1 et 2, ce qui permet d'assurer un amortissement efficace pour une fréquence qui dépend des cotes du canal 14, tout au moins tant que les orifices 7 demeurent obturés ou peu dégagés, le dégagement total de ces orifices pouvant avoir pour effet de court-circuiter le canal 14.

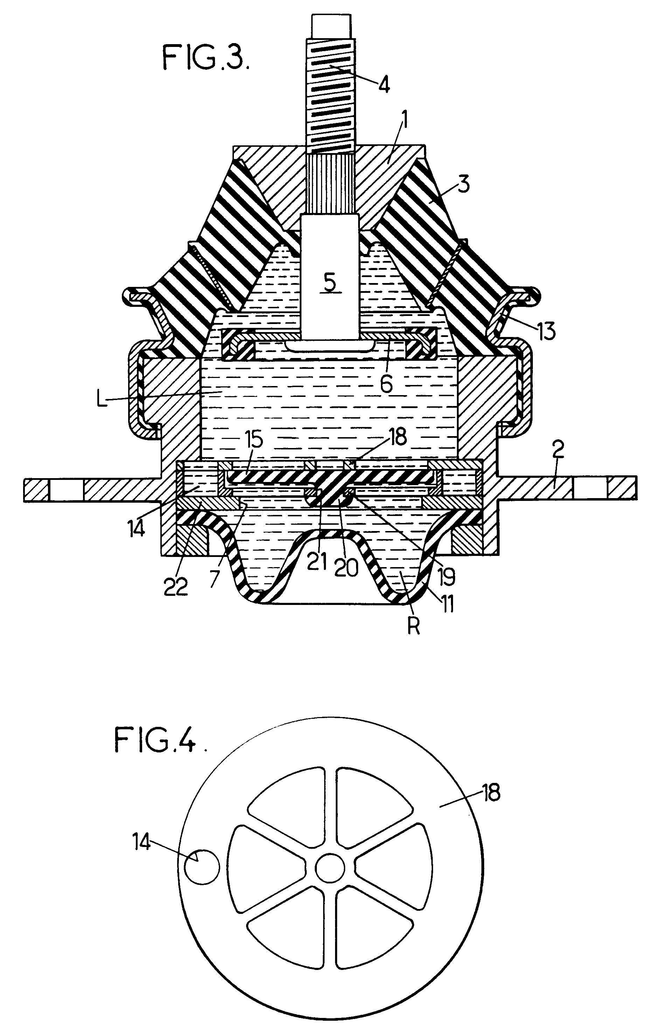

Dans le mode de réalisation illustré sur les figures 3 et 4, les éléments analogues à ceux précédemment décrits portent les mêmes références que précédemment.

Ce mode de réalisation diffère essentiellement du précédent en ce que la section de la lumière 7 n'y est plus réglable à volonté : on suppose ici qu'elle a sa valeur optimum préalablement déterminée en usine en fonction de l'application projetée, par exemple à l'aide d'un prototype à ouverture réglable tel que décrit précédemment.

Dans ce mode de réalisation en outre, le clapet 15 est contenu avec jeu entre deux grilles planes et parallèles 18 et 19 et il est constitué par une pastille déformable en caoutchouc centrée grâce à un bouton central 20 à tête élargie venu de moulage avec elle et introduit à force dans un logement central complémentaire 21 de l'une des grilles.

Les cotes du clapet et des pièces rigides constituant les grilles sont telles que, lorsque le clapet n'est pas appliqué contre l'une des grilles, le liquide L peut circuler librement à travers celles-ci, tout au moins tant que n'est pas atteinte une valeur donnée de la fréquence -relativement "haute"- des vibrations à amortir, valeur correspondant à la "résonance" de la masse liquide alors "étranglée" dans l'ajutage constitué par lesdites grilles.

La lumière 7 est ici le trou circulaire évidé dans une rondelle 22 juxtaposée axialement au-dessous de la grille inférieure 19 et son diamètre moyen est de préférence supérieur à celui des ouvertures de chaque grille.

Dans chaque cas, la longueur, comptée selon la direction de circulation du liquide, de chaque lumière 7, est beaucoup plus petite que le diamètre moyen global de cette lumière.

Le rapport entre ledit diamètre moyen et ladite longueur est avantageusement de l'ordre de 5 à 20, ou même supérieur à 20.

Pour un diamètre du piston 6 de l'ordre de 50 à 70 mm, la lonqueur de la lumière 7 est par exemple de l'ordre de 2 à 3 mm pour un diamètre moyen de l'ordre de 10 à 50 mm.

On notera que, pour le passage étranglé 14, s'il est prévu, le rapport entre le diamètre moyen et la longueur est nettement inférieur à 1 au lieu d'être nettement supérieur à 1, ce rapport étant généralement inférieur à 1/5 et même à 1/10.

En suite de quoi et quel que soit le mode de réalisation adopté, on dispose finalement d'un support antivibratoire dont la constitution et le fonctionnement résultent suffisamment de ce qui précède.

Ce support présente un certain nombre d'avantages par rapport à ceux antérieurement connus et en particulier celui de rendre possible d'une manière extrêmement simple et efficace un réglage de la fréquence d'amortissement optimum qui correspond à la mise en résonance de la colonne annulaire de liquide entourant le piston qui est immergé dans le boîtier.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment:
- celles où une bague rigide d'axe X solidarisée avec la cuvette 2 et immergée dans le boîtier 1, 2, 3, entourerait avec jeu le pied 5 de façon à servir éventuellement de butée axiale pour le piston 6 lors de l'application d'une sollicitation axiale trop élevée à la traction sur l'une des deux pièces 1 et 2 par rapport à l'autre, ce qui évite alors la destruction du support par "arrachement",
- celles où le piston 6 serait évidé axialement par des perforations ou encoches,
- celles où le clapet obturateur 8 associé à des organes de commande extérieurs serait mobile axialement et non angulairement et comprendrait alors, notamment, un bord tronconique propre à coagir avec un siège fixe tronconique,
- celles où ledit clapet 8 à commande extérieure serait seul retenu à l'exclusion du canal étranglé 14 et du clapet vibrant 15, l'équilibrage entre les pressions de liquide régnant respectivement à l'intérieur du boîtier 1, 2, 3 et de la poche R étant alors avantageusement obtenu par création de "fuites" entre le clapet 8 en sa position de fermeture et le siège de ce clapet,
- et celles où la "membrane de découplage" 15 ci-dessus serait disposée, non pas à l'intérieur du boîtier 1, 2, 3, notamment au-dessus de son fond, mais à l'intérieur de la poche R, notamment en série avec l'ensemble des orifices 7, entre le clapet 8 et le soufflet 11.

## Revendications

1. Dispositif antivibratoire hydraulique destiné à être interposé aux fins de support et d'amortissement entre deux éléments rigides, constitué par un boîtier étanche comportant un noyau rigide (1) solidarisable avec l'un des deux éléments rigides, une embase rigide (2) solidarisable avec l'autre élément rigide, et une paroi élastique annulaire de support (3) reliant de manière étanche le noyau à l'embase, le volume intérieur audit boîtier étant rempli d'un liquide L et le noyau étant prolongé, à l'intérieur du boîtier, par un pied rigide (5) lui-même terminé par un sabot ou piston (6) dont le contour définit, avec la portion de paroi en regard du boîtier, un passage annulaire étranglé (P) pour le liquide, la face de l'embase (2), qui est extérieure au boîtier, étant coiffée par un soufflet flexible et étanche (11) raccordé de façon étanche à cette face de façon à former avec elle une poche (R) de volume variable pour le liquide, ladite embase étant perforée par au moins une lumière (7), simple ou multiple, qui fait communiquer entre eux les volumes intérieurs du boîtier (1,2,3) et de la poche (R), caractérisé en ce que la longueur de la lumière (7) est inférieure à son diamètre moyen, et en ce que, pour un diamètre du piston (6) de l'ordre de 50 à 70 mm, la longueur de la lumière (7) est de l'ordre de 2 à 3 mm et son diamètre moyen de l'ordre de 10 à 50 mm.

2. Dispositif selon la revendication 1, dans lequel la face intérieure du boîtier est délimitée en partie par un clapet ou membrane (15) monté de façon à pouvoir vibrer avec des débattements d'amplitude limitée.

3. Dispositif selon la revendication 2, dans lequel le clapet (15) est monté de façon à pouvoir alternativement obturer et dégager la lumière (7).

4. Dispositif selon l'une quelconque des revendications 2 et 3, dans lequel le clapet (15) est contenu avec jeu entre deux grilles (18,19) montées en série avec la lumière (7), et dans lequel le diamètre moyen global des ouvertures de chaque grille est inférieur à celui de la lumière.

5. Dispositif selon l'une quelconque des revendications 2 à 4, dans lequel l'embase (2) est perforée en outre par au moins un canal (14) dont la longueur est très supérieure au diamètre moyen, canal faisant communiquer entre eux les volumes intérieurs du boîtier (1,2,3) et de la poche (R).

6. Dispositif selon l'une quelconque des revendications précédentes, dans lequel le degré d'ouverture de la lumière (7) peut être réglé à l'aide d'un clapet obturateur (8) associé à des moyens de commande extérieurs.

7. Dispositif selon la revendication 6, dans lequel le clapet obturateur (8) est rotatif et lié angulairement à l'arbre (9) d'un petit moteur électrique (10) dont la commande est elle-même asservie à la fréquence des oscillations à amortir au maximum.

8. Dispositif selon la revendication 6, dans lequel le clapet obturateur est déplaçable axialement et comprend un bord tronconique applicable contre un siège tronconique faisant partie de l'embase.

9. Dispositif selon la revendication 1, dans lequel le lumière (7) communique directement avec le volume intérieur du boîtier et avec la poche (R).

10. Dispositif selon l'une quelconque des revendications précédentes, dans lequel le diamètre moyen de la lumière (7) est compris entre 5 et 20 fois sa longueur.

## Claims

1. Hydraulic anti-vibratory device designed to be inserted for the purposes of support and damping between two rigid elements, constituted by a sealed box comprising a rigid core (1) which can be made fast with one of the two rigid elements, a rigid base (2) which can be made fast with the other rigid element, and an annular supporting elastic wall (3) connecting the core to the base in sealed manner, the inner space of said box being filled with a liquid L and the core being prolonged, inside the box, by a rigid foot (5) itself terminated by a shoe or piston (6) whose contour defines, with the opposite wall portion of the box, a throttled annular passage (P) for the liquid, the surface of the base (2) which is outside the box being capped by a flexible and sealed bellows (11) sealingly connected to this surface so as to form with it a pocket (R) of variable volume for the liquid, said base being perforated by at least a single or multiple port (7) which connects between one another the inner spaces of the box (1, 2, 3) and of the pocket (R), characterized in that the length of the port (7) is less than its mean diameter, and in that, for a diameter of the piston (6) of the order of 50 to 70 mm, the length of the port (7) is of the order of 2 to 3 mm and its mean diameter, of the order of 10 to 50 mm.

2. Device according to claim 1, wherein the inner surface of the box is bounded in part by a valve or diaphragm (15) mounted so as to be able to vibrate with movements of limited amplitude.

3. Device according to claim 2, wherein the valve (15) is mounted so as to be able alternately to obturate and disengage the port (7).

4. Device according to any one of claims 2 and 3, wherein the valve (15) is contained with play between two grids (18, 19) mounted in series with the port (7), and wherein the overall mean diameter of the apertures of each grid is less than that of the port.

5. Device according to any one of claims 2 to 4, wherein the base (2) is perforated in addition by at least one channel (14) of which the length is very much greater than the mean diameter, said channel connecting with one another the inner spaces of the box (1, 2, 3) and of the pocket (R).

6. Device according to any one of preceding claims, wherein the degree of opening of the port (7) can be regulated by means of an obturator valve (8) associated with external actuating means.

7. Device according to claim 6, wherein the obturator valve (8) is rotary and connected angularly to the shaft (9) of a small electric motor (10) whose actuation is itself servo-coupled to the frequency of the oscillations to be damped to the maximum.

8. Device according to claim 6, wherein the obturator valve is axially movable and comprises a frustoconic edge applicable against a frustoconic seat forming part of the base.

9. Device according to claim 1, wherein the port (7) communicates directly with the inner space of the base and with the pocket (R).

10. Device according to any one of the preceding claims, wherein the mean diameter of the port (7) is comprised between 5 and 20 times its length.

## Patentansprüche

1. Hydraulisches Antischwingungslager, das zum Zwecke der Abstützung und Dämpfung zwischen zwei starren Elementen einfügbar ist und aus folgenden Teilen besteht: einem dichten Behälter mit einem starren Kern (1), der an einem der starren Elemente anbringbar ist, einer starren Fußplatte (2), die an dem anderen starren Element anbringbar ist und einer elastischen, ringförmigen Stützwand (3), die den Kern dicht mit der Fußplatte verbindet, wobei der Innenraum des Behälters mit einer Flüssigkeit (L) gefüllt und der Kern im Inneren des Behälters durch ein starres Fußstück (5) verlängert ist, an dessen Ende ein Flansch oder Kolben (6) sitzt, dessen Umriß mit dem gegenüberliegenden Abschnitt der Wandung des Behälters einen ringförmigen verengten Durchlaß (P) für die Flüssigkeit bildet und die Oberfläche der Fußplatte (2), die außerhalb des Behälters liegt, mit einem biegsamen und dichten Balg (11) bedeckt ist, der dicht mit dieser Oberfläche verbunden ist, so daß er mit ihr eine Tasche (R) mit veränderbarem Volumen für die Flüssigkeit bildet und wobei die Fußplatte mit wenigstens einer einfachen oder mehrfachen Öffnung (7) versehen ist, die den Innenraum des Behälters (1, 2, 3) und den Innenraum der Tasche (R) miteinander verbindet, dadurch gekennzeichnet, daß die Länge der Öffnung (7) kleiner ist als sein mittlerer Durchmesser, und daß bei einem Durchmesser des Kolbens (6) in der Größenordnung von 50 bis 70 mm die Länge der Öffnung (7) etwa 2 bis 3 mm und sein mittlerer Durchmesser etwa 10 bis 50 mm beträgt.

2. Lager nach Anspruch 1, bei dem die innere Oberfläche des Behälters teilweise durch ein Ventil oder eine Membran (15) begrenzt wird, die so befestigt ist, daß sie mit Ausschlägen mit einer begrenzten Amplitude schwingen kann.

3. Lager nach Anspruch 2, bei dem das Ventil (15) so befestigt ist, daß es alternativ die Öffnung (7) verschließen oder freigeben kann.

4. Lager nach einem der vorhergehenden Ansprüche 2 und 3, bei dem das Ventil (15) mit Spiel zwischen zwei Gittern (18, 19) gehalten wird, die in Reihe mit der Öffnung (7) befestigt sind und bei dem der mittlere Gesamtdurchmesser der Öffnungen jedes Gitters kleiner ist als der der Öffnung.

5. Lager nach einem der vorhergehenden Ansprüche 2 bis 4, bei dem die Fußplatte (2) zusätzlich mit wenigstens einem Kanal (14) versehen ist, dessen Länge sehr viel größer ist als der mittlere Durchmesser, wobei der Kanal den Innenraum des Behälters (1, 2, 3) und den der Tasche (R) miteinander verbindet.

6. Lager nach einem der vorhergehenden Ansprüche, bei dem die Größe der Öffnung (7) mittels eines Absperrventils (8) eingestellt werden kann, das mit außen angeordneten Steuereinrichtungen versehen ist.

7. Lager nach Anspruch 6, bei dem das Absperrventil (8) drehbar und winklig mit der Welle (9) eines kleinen Elektromotors (10) verbunden ist, dessen Steuerung seinerseits an die Frequenz der maximal zu dämpfenden Schwingungen angepaßt ist.

8. Lager nach Anspruch 7, bei dem das Absperrventil axial verschiebbar ist und einen konischen Rand enthält, der gegen einen konischen Sitz andrückbar ist, der Teil der Fußplatte ist.

9. Lager nach Anspruch 1, bei dem die Öffnung (7) direkt mit dem Innenraum des Behälters und mit der Tasche (R) in Verbindung steht.

10. Lager nach einem der vorhergehenden Ansprüche, bei dem der mittlere Durchmesser der Öffnung (7) zwischen dem 5 und 20-fachen seiner Länge liegt.
